# DEMANDE DE BREVET EUROPEEN

(11) **EP 1 944 992 A1**
(43) Date de publication de la demande: **16.07.2008**
(21) Numéro de dépôt: 07301546.3
(22) Date de dépôt: 13.11.2007
(51) Int. Cl.: H04Q 7/38, H04M 7/00

(54) **Système de terminaisons d'appels vers des numéros de mobiles par IP sans coopération du réseau de mobile**

(30) Priorité: 10.01.2007 FR 0752608; 19.10.2007 FR 0758430
(71) Demandeur: Halys, 75015 Paris (FR)
(72) Inventeur: Henry-Labordere, Arnaud, 75007, PARIS (FR)
(74) Mandataire: Herrburger, Pierre

(57) **Abrégé**

Système de terminaison d'appel par le réseau Internet IP vers un numéro de mobile sans coopération du réseau de mobile pour recevoir automatiquement dans un poste mobile ne fonctionnant pas en mode GSM, les appels destinés à ce numéro de mobile comprenant
- un serveur SAR d'authentification et de renvoi,
- un serveur SRAR relais d'authentification et RADIUS, relié au serveur SAR et permettant à la passerelle de mode VoIP de trouver l'adresse IP attribuée au poste mobile et de diriger l'appel en mode VoIp, ce serveur n'ayant que des interfaces IP,
- un lecteur de carte SIM associé au poste mobile,
- un programme (CRA) dans le poste mobile,
- une plate-forme VoIP entre le réseau téléphonique et la téléphonie par IP, mettant en oeuvre le protocole VoIP en ayant obtenu l'adresse IP à partir du numéro du mobile,
- un programme VoIP dans le poste mobile, permettant d'émettre des appels, notamment vers les membres du carnet d'adresse de la carte SIM et d'en recevoir vers l'adresse IP.

## Description

### Domaine de l'invention

La présente invention concerne un système de terminaison d'appel par le réseau Internet IP vers un numéro de mobile pour recevoir automatiquement dans un poste mobile ne fonctionnant pas en mode GSM, les appels destinés à ce numéro de mobile. La mise en oeuvre du système est possible individuellement sans coopération directe du réseau du mobile GSM de l'utilisateur ou de son entreprise.

### Etat de la technique

Les mobiles actuels peuvent utiliser les services : voix, messages, Internet, visio UMTS dans de nombreux pays. Par ailleurs de nombreux voyageurs transportent leur PC et souhaitent pouvoir l'utiliser pour leurs communications téléphoniques et autres quand ils sont à l'étranger, pour la commodité et des économies. Ils veulent recevoir les appels téléphoniques vers leur numéro mobile habituel. Et aussi, recevoir les appels sur leur PC même si leur mobile n'a pas de couverture d'itinérance, alors que le réseau Internet est accessible d'une façon plus étendue, sans accord bilatéraux.

Il existe de nombreux fournisseurs qui offrent des services utilisant « la Voix sur IP » appelé mode VoIP ; cette solution permet une nette réduction de coûts pour les appels vers l'étranger. L'émission des appels par le mode VoIP est simple, et il est habituel maintenant à partir d'un PC de faire des appels téléphoniques. Pour recevoir les appels, il suffit que l'utilisateur effectue, à partir de son mobile, un renvoi d'appel vers la plate-forme mode VoIP de son fournisseur. Mais pour cela, faut-il utiliser le mobile ce qui est impossible si celui-ci se trouve dans une zone ne bénéficiant pas d'accord d'itinérance dans le pays visité.

Il existe également depuis peu le système UNIK de l'opérateur mobile Orange. L'utilisateur doit être équipé d'un téléphone mobile spécial « mixte GSM-WiFI » comportant deux parties distinctes :
- un mobile GSM pour la réception d'appels dans tous les cas et leur émission s'il n'a pas de couverture WiFI.
- un WiFI, exclusivement pour émettre des appels, en s'enregistrant sur une borne WiFI.

D'autres systèmes ont été proposés, par exemple selon le document US 2005/016960, qui permettent effectivement de recevoir sur un PC un appel vers le numéro GSM. Mais leur réalisation repose sur un équipement appelé CGW qui doit être mis en oeuvre par l'opérateur du réseau de mobile car il utilise la procédure « UPDATE LOCATION » du protocole MAP, réservée à des équipements de type MSC-VLR pour relocaliser les abonnés du réseau dans le cadre des accords d'itinérance.

Or l'opérateur de mobile peut considérer que le système va lui faire perdre des revenus et ne pas coopérer à sa mise en oeuvre.

### But de l'invention

Le but de l'invention est de développer sans nécessiter la procédure UPDATE LOCATION, un système qui permet à un fournisseur de services, alors que l'utilisateur ne peut utiliser son mobile, d'effectuer, le renvoi des communications reçues et ce avec une authentification (identification) et sécurité égales à celle du système GSM et pouvoir recevoir les appels sur un poste mobile, son PC ou un mobile n'utilisant pas la fonction GSM ou ne pouvant pas l'utiliser.

### Exposé et avantages de l'invention

A cet effet, l'invention concerne un système de terminaison d'appel caractérisé en ce qu'il comprend
- un serveur SAR d'authentification et de renvoi, installé dans un réseau GSM et communiquant par le protocole standard MAP avec le registre HLR de ce réseau et aussi par une liaison IP,
- un serveur SRAR qui est un relais d'identification appliquant le protocole RADIUS, relié au serveur SAR et permettant à la plate-forme de mode VolP, à partir du numéro MSISDN du mobile, de trouver l'adresse IP, dynamique, attribuée au poste mobile et de diriger l'appel en mode VoIP, ce serveur n'ayant que des interfaces IP,
- un lecteur de carte SIM associé au poste mobile,
- un programme (CRA) dans le poste mobile pour communiquer avec la carte SIM placée dans le lecteur, et avec le serveur SRAR,
- une plate-forme VoIP entre le réseau téléphonique et la téléphonie par IP, mettant en oeuvre le protocole VoIP en ayant obtenu l'adresse IP à partir du numéro du mobile,
- un programme VoIP dans le poste mobile, permettant d'émettre des appels et d'en recevoir par l'adresse IP.

L'invention permet « une extension d'itinérance par IP ». L'utilisateur pourra recevoir les appels sur son poste mobile, par exemple son PC, comme il les recevrait sur son mobile, partout où Internet est disponible, alors que son mobile, qui n'a pas d'itinérance, par hypothèse, ne peut pas communiquer par le mode GSM.

L'invention est très intéressante pour des petits opérateurs qui pourront utiliser les PC des clients fonctionnant ainsi comme des mobiles dans des pays où ces opérateurs n'ont pas d'accords d'itinérance ; cela permet aussi faire des économies.

L'opération consistant à commander la réception des appels vers le numéro de mobile est sécurisée et ne peut pas être déclenchée par un tiers d'une façon frauduleuse. La carte SIM (placé dans un lecteur branché sur un poste mobile tel que le PC) et la procédure GSM sont utilisées pour l'identification.

Suivant une autre caractéristique avantageuse de l'invention, le réseau de la carte SIM a une fonction d'authentification, ou plus exactement d'identification AUC associée à son registre HLR pour alimenter le serveur d'indentification et de renvoi SAR et lui fournir sur requête du poste mobile, un numéro aléatoire RAND et un code SRES formé à partir du numéro aléatoire RAND et de la clé Ki associée au numéro du mobile ; le serveur SAR transmet ces deux données (le numéro aléatoire RAND et le code SRES) au serveur relais d'identification appliquant le protocole RADIUS appelé serveur SRAR, qui transmet le numéro aléatoire RAND au poste mobile PM pour que celui-ci calcule un code SRES_{calc} à partir du code SIM, et en appliquant la clé Ki contenue dans la carte SIM, selon un calcul analogue au calcul effectué par la fonction d'authentification ; la carte SIM renvoie par l'intermédiaire du poste mobile PM, le code calculé SRES_{calc} au serveur SRAR qui le compare au code SRES ; et en cas d'identité, il accepte le poste mobile PM comme étant autorisé par la carte SIM et l'appel entrant est transmis vers le poste mobile, alors qu'en cas de différence. Le serveur SRAR refuse l'accès au poste mobile.

Suivant une autre caractéristique avantageuse, après l'identification entre la carte SIM et la fonction AUC, le numéro MSISDN de mobile est obtenu par la procédure RESTORE DATA ce qui permet de faire un renvoi automatique des appels pour ce numéro vers une plate-forme VoIP qui terminera les appels sur le poste mobile PM.

Suivant une autre caractéristique avantageuse, le lecteur de carte SIM est branché sur la prise USB si un PC est utilisé comme terminal.

Suivant une autre caractéristique, le lecteur de carte SIM permet de lire le carnet d'adresses de la carte SIM et, par intersection avec la liste de tous les utilisateurs connectés, permet d'afficher la liste personnelle de connectés sur le poste mobile tel que le PC pour permettre l'appel en VoIP de bout en bout.

Ainsi, l'invention permet la lecture du carnet d'adresses et d'afficher sur l'écran du carnet d'adresses automatiquement la liste des contacts connectés pour des appels gratuits en VoIP de bout en bout. Ce système est particulièrement simple pour un service destiné à des utilisateurs individuels.

### Dessins

Les modes de réalisation de l'invention seront décrits ci-après à titre d'exemple dans les dessins annexés dans lesquels :
- la figure 1 représente la procédure d'enregistrement du poste PC pour la réception d'appels,
- la figure 2 représente la procédure d'un appel vers un numéro de mobile reçu sur le poste mobile en mode VoIP,
- la figure 3 représente le dialogue d'enregistrement de la carte et identification lors de la procédure d'enregistrement,

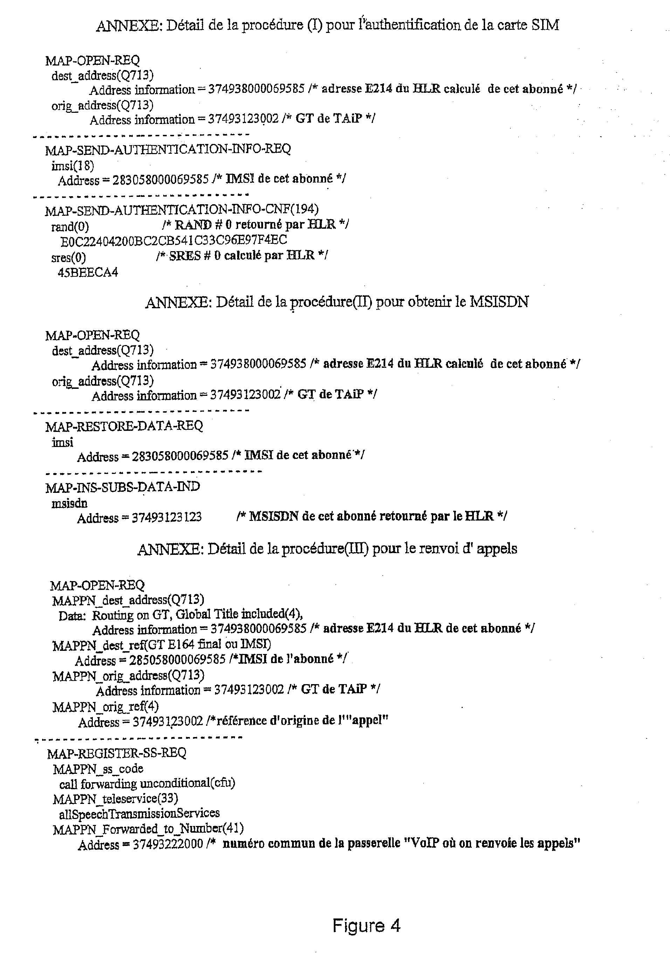

- la figure 4 montre le détail de la procédure d'identification de la carte SIM, le détail de la procédure permettant d'obtenir le numéro MSISDN et le détail de la procédure de renvoi d'appels

### Description de modes de réalisation

Le système selon l'invention se compose d'équipements et programmes associés à un réseau de mobiles A et à des postes mobiles PM au sens de l'invention, c'est-à-dire des PC et des mobiles TM mixtes, GSM-WiFI, n'utilisant pas la fonction GSM, par exemple des mobiles qui ne sont pas en situation d'utiliser la fonction GSM.

L'invention permet au poste mobile PM de recevoir les appels alors que la seule liaison disponible est par IP, éventuellement sans fil (WiFi) vers le mobile. Dans le cas d'un poste mobile PM en forme de téléphone mixte TM, si le mode WiFI est actif, dans la partie GSM du téléphone mixte (mobile mixte) TM, seule la fonction identification de la carte SIM est utilisée mais pas la fonction GSM.

### Eléments composant le système

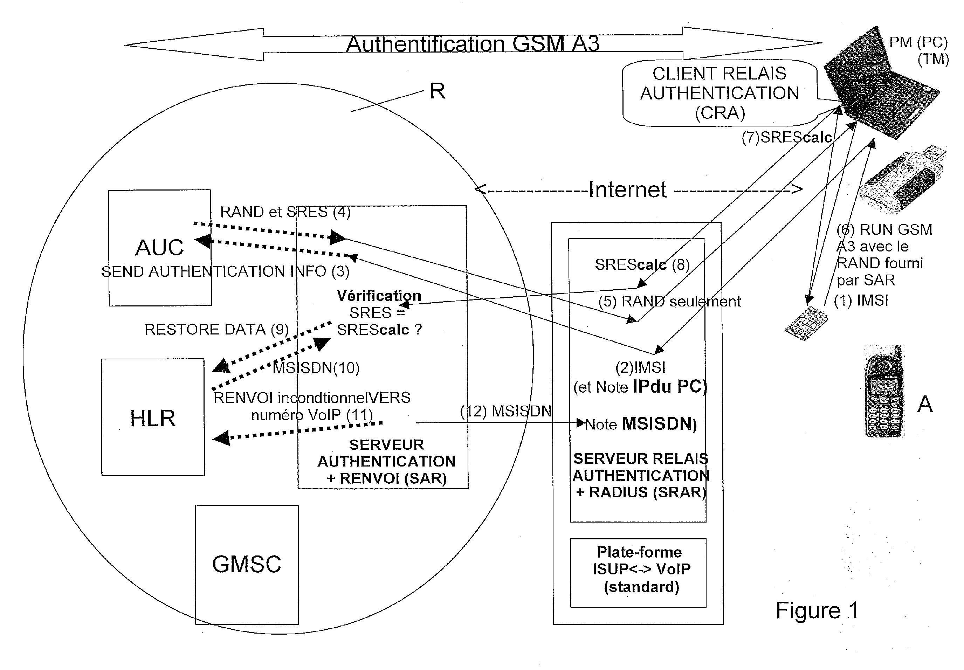

Selon la figure 1 le système de terminaison d'appel Internet par IP est constitué d'un serveur SAR d'identification accessible par l'intermédiaire d'un serveur relais SRAR ; les postes mobiles PM, (c'est-à-dire les PC ou les téléphones mixtes) comportent un lecteur de carte SIM et un programme CRA installé dans chaque poste mobile PM ainsi qu'une plate-forme VoIP et un programme VoIP.

Dans le cas du poste mobile PM constitué par un PC, celui-ci est, soit muni directement d'un lecteur de carte SIM, soit relié à un lecteur de carte SIM. Dans le cas du téléphone mixte TM, le lecteur de carte SIM est intégré au mobile mixte TM (qui est aussi le mobile A) .

L'utilisateur du poste mobile PM comme téléphone mobile par la voie IP ou du téléphone mixte TM par la voie IP nécessite l'enregistrement du poste mobile pour la réception des appels. Cet enregistrement est combiné par une procédure d'identification de la carte SIM appliquée par le poste mobile PM. Cette procédure automatique est effectuée immédiatement dès l'ouverture du poste mobile PM. Une procédure de désenregistrement est également prévue.

Après l'enregistrement, le poste mobile PM est accessible pour l'émission ou la réception des appels.

Le détail de structure du système et de son fonctionnement seront donnés ci-après.
- Le serveur SAR est un Serveur d'identification et de renvoi installé dans un réseau R du système GSM et communique par le protocole standard MAP (selon la norme du contrôle de signalisation SS7) avec le ou les registres HLR de ce réseau. Il communique aussi par une liaison IP.
- Le serveur SRAR est un Serveur de relais identification appliquant le protocole RADIUS. Ce serveur relié au serveur SAR permet à la plate-forme VoIP, à partir du numéro MSISDN d'un mobile, de trouver l'adresse IP dynamique attribuée au poste mobile et de diriger l'appel VoIP. Ce serveur SRAR n'a que des interfaces IP.
- Le lecteur de carte SIM est associé au poste mobile PM ; dans le cas d'un poste mobile PM constitué par un PC, le lecteur de carte SIM y existe déjà ou est branché sur une clé USB. Dans le cas d'un poste mobile PM constitué par un téléphone mobile mixte GSM et WiFI, le lecteur de carte SIM fait évidemment partie du mobile mixte TM.
- Un programme (CRA) est installé dans chaque poste mobile PM pour communiquer avec la carte SIM dans le lecteur, et avec le serveur SRAR,
- Une plate-forme VolP est prévue entre le réseau téléphonique (notamment ISUP) et la téléphonie par IP. Elle met en oeuvre les protocoles VolP standard comme SIP ou H323 mais aussi n'importe quel protocole existant utilisable en s'adaptant facilement en respectant le protocole RADIUS de façon à obtenir une adresse IP à partir d'un numéro de téléphone MSISDM d'un mobile.
- Un programme VolP dans chaque poste mobile PM, permettant d'émettre des appels et d'en recevoir vers les adresses IP.

L'utilisateur met sa carte SIM dans le lecteur de son poste mobile PM quand il arrive dans le pays visité, s'il n'a pas d'accord d'itinérance ou s'il souhaite utiliser son poste mobile PM à la place de son mobile A.

Le serveur SAR n'a pas d'interface pour recevoir ou émettre les communications téléphoniques mais une interface pour la norme SS7, avec les trois services suivant du protocole MAP :
- Le service SEND AUTHENTICATION INFO ou SEND PARAMETERS qui ce service permet, avec le numéro IMSI, d'obtenir la clé SRES et un numéro aléatoire (numéro aléatoire) RAND pour l'algorithme standard d'identification GSM.
- Le service RESTORE DATA qui permet de lire dans un registre HLR, le numéro de téléphone MSISDN correspondant au numéro IMSI de la carte SIM.
- Le service REGISTER SUPPLEMENTARY SERVICE qui commande le renvoi de tous les appels à destination du mobile A, vers le poste mobile PM actif. Ce service du protocole MAP est celui qui est déclenché vers le registre HLR par le centre MSC visité quand un utilisateur mobile effectue manuellement le transfert d'appel. Dans l'invention, ce service MAP est déclenché automatiquement quand on insère (ou enlève) l'ensemble lecteur USB-carte SIM dans le poste mobile PM.
Le système selon l'invention n'utilise pas la procédure UPDATE LOCATION comme les autres procédés connus, ce qui a l'avantage de permettre d'installer le serveur SAR de l'invention chez n'importe quel opérateur qui a une route SS7 ouverte avec l'opérateur du mobile A concerné sans nécessiter sa coopération pour le service de terminaison d'appel par IP.

### Description détaillé du fonctionnement

Les principales phases de fonctionnement du système de terminaison d'appel par IP sont tout d'abord l'enregistrement du poste mobile PM tel que le PC ou le téléphone mixte TM n'utilisant pas la fonction GSM, puis la réception d'un appel lorsque le poste mobile PM et enfin le désenregistrement du poste mobile PM pour que les appels qui lui sont destinés suivent la voie normale et aboutissent ou sont renvoyés sur sa messagerie vocale.

Enfin, la description sera faite du détail de différentes procédures d'authentification, d'obtention du numéro MSISDN et du renvoi d'appel.

### Enregistrement du poste mobile PM pour la réception des appels

Selon la figure 1, l'utilisateur d'un mobile met (1) sa carte SIM dans le lecteur connecté par une prise USB au poste mobile PM. Le logiciel CRA chargé préalablement, démarre sur détection de présence du lecteur qui lit le numéro IMSI de la carte SIM ; à travers Internet, le logiciel CRA établit une connexion, préalablement configurée vers le nom de domaine (ou une adresse IP connue) du serveur SRAR. Le logiciel CRA transmet (2) le numéro IMSI au serveur SRAR, qui relaie la demande au serveur SAR pour l'identifier.

Avec le numéro IMSI, le serveur SAR, à travers son interface SS7, demande (3) avec un signal SEND_AUTHENTICATION_INFORMATION à la fonction AUC, un numéro aléatoire RAND et le Code SRES ; le numéro RAND et le code SRES sont formés selon la procédure suivante :
- le registre HLR utilise le numéro IMSI pour obtenir la clé Ki ; il génère aussi un numéro aléatoire RAND ;
- puis le registre utilise le numéro RAND et la clé Ki pour calculer selon l'algorithme A3, le code SRES,
- le registre HLR retourne (4) le numéro RAND et le code SRES au serveur SAR.

Le serveur SAR note le code SRES qu'il garde en mémoire et envoie le numéro aléatoire RAND en réponse à la requête du serveur SRAR qui la retransmet (5) au programme CRA dans le poste mobile PM.

Le programme CRA du poste mobile PM envoie (6) le numéro aléatoire RAND à la carte SIM en lui demandant de faire le même calcul selon l'algorithme A3 avec ce numéro aléatoire RAND et la clé Ki contenue dans sa carte SIM. Le code SREScalc ainsi calculé est envoyé (7) au poste mobile PM qui le transmet (8) au serveur SAR à travers le serveur SRAR. Le serveur SAR compare le code SRC_{calc} envoyé et le code SRES que lui a transmis la fonction AUC.

Si le code SREScalc est égal au code SRES, la carte SIM est considérée comme authentique et le serveur SAR accepte alors la connexion. Mais la connexion est rejetée en cas de différence entre le code calculé SREScalc et le code SRES.

Un mécanisme standard possible pour interfacer le serveur SRAR et le serveur SAR est le protocole SMPP, pour transporter les données nécessaires vers le poste mobile PM (serveur SRAR-serveur SAR).

L'interface du programme CRA avec la carte SIM et ses différentes commandes sont décrits dans la norme GSM 11.11 « Digital cellular telecommunications system(Phase 2+), Specification of the Subscriber Identity Module, Mobile Equipment (SIM-ME) interface ». Plus précisément, le poste mobile PM envoie à la carte SIM, la commande RUN GSM ALGORITHM avec le numéro aléatoire RAND comme paramètre. La carte SIM retourne le code calculé SRESc.

Si la carte est authentifiée, le serveur SAR envoie (9) vers le registre HLR une requête RESTORE DATA qui n'a besoin que du numéro IMSI ; le registre HLR retourne le numéro MSISDN (numéro ordinaire) du mobile A. Le serveur SAR a déjà l'adresse IP du poste mobile PM, connue depuis la connexion initiale.

Puis, le serveur SAR, toujours avec le seul numéro IMSI, grâce à une requête REGISTER_SS, (renvoi inconditionnel), renvoie (11) tous les appels destinés au numéro MSISDN vers le numéro de téléphone unique de la plate-forme VoIP, pour tous les abonnés.

Enfin, le serveur SAR retourne (12) le numéro MSISDN au serveur SRAR qui peut alors créer l'entrée RADIUS :

MSISDN -> Adresse IP du poste mobile PM ; (cette adresse avait été notée lors de la connexion (2) du poste mobile et elle sera utilisée pour les appels par le poste mobile PM.

Les traces très détaillées sont données pour expliquer le fonctionnement. La description a été faite ci-dessus dans le cas d'un poste mobile constitué par un PC. Mais ces explications s'appliquent également à un téléphone TM, dit « mixte GSM-WiFI » : il suffit de remplacer l'ensemble (PC + lecteur USB de carte SIM) par un téléphone TM « mixte » GSM - WiFI. Ceci évite d'avoir à enlever la carte SIM et à la remettre. Soulignons que dans l'invention, les correspondants joignent le mobile par son numéro de mobile habituel mais que l'appel est reçu en IP (y compris en WiFI) de bout en bout, et non en GSM, y compris si le mobile n'a pas d'itinérance GSM.

### Réception d'appel en « itinérance par IP »

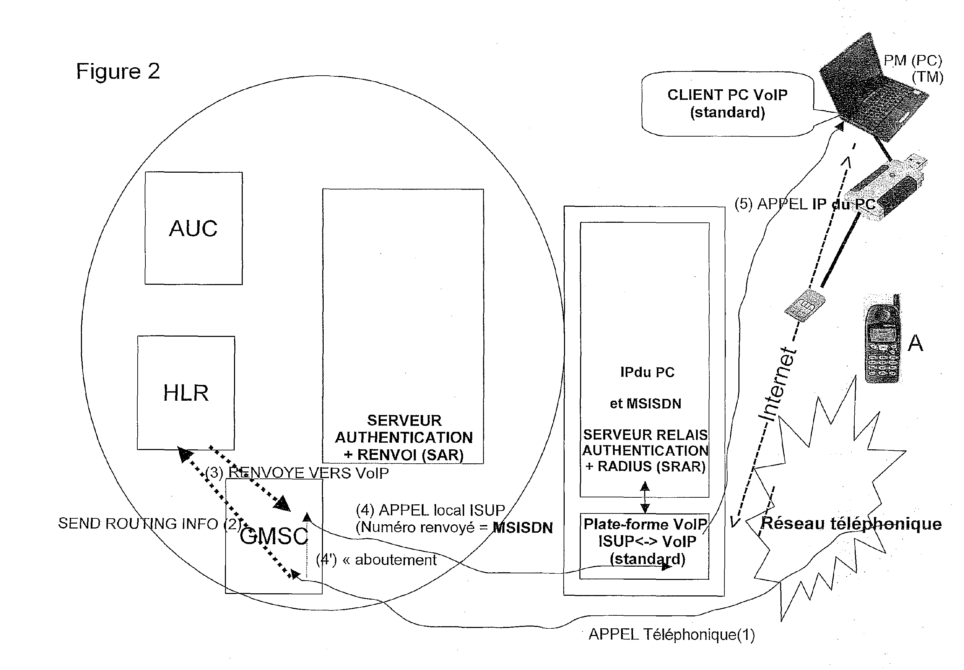

Selon la figure 2, un appel (1) est effectué vers le numéro de mobile après la phase d'enregistrement.

L'appel arrive à la passerelle GMSC du réseau GSM. La passerelle GMSC interroge (2) le registre HLR par une requête SEND ROUTING INFO ; le registre HLR lui répond (3) que le numéro est renvoyé inconditionnellement vers le numéro unique de la plate-forme VoIP. Le commutateur GMSC émet un appel (4) vers ce numéro en mettant dans un des paramètres d'appel, le numéro MSISDN du mobile appelé « Original Called Number ». Il correspond à l'un des champs du message IAM du protocole ISUP). Puis, le commutateur « aboute » (4') l'appel d'entrée (1) et la sortie (4). La plate-forme VoIP extrait le numéro MSISDN du message d'appel et le protocole RADIUS du serveur SRAR lui donne l'adresse IP du poste PC.

La plate-forme VolP établit alors la connexion (5) avec le poste mobile PM suivant un protocole standard comme H323 ou SIP.

### Dé-enregistrement

Le système permet par le logiciel « client » du poste mobile, lorsque la clé USB est enlevée, de supprimer « l'itinérance par IP », comme suit. Cette information venant du client, transmise par l'interface SS7, est une requête (ERASE_Supplementary_Services), de suppression du renvoi inconditionnel. Tout appel vers le mobile A sera alors soit en échec, soit renvoyé en messagerie vocale suivant la configuration de l'abonnement du mobile. Dans le cas du téléphone WiFI, la coupure de la liaison avec le serveur SRAR déclenche automatiquement cette procédure de dé-enregistrement.

L'invention telle que décrite ci-dessus s'applique également au cas de cartes jumelles fournies par certains opérateurs GMS. Il s'agit d'un abonné qui dispose de deux cartes SIM répondant au même numéro de téléphone mais correspondant à deux numéros MSISDN différents attribués à ce même abonné. La gestion de l'utilisation de ces deux numéros MSISDN est faite par l'opérateur du réseau de manière transparente pour le client.

Ce cas des cartes jumelles est par exemple celui d'un mobile et d'un téléphone de voiture répondant tous deux au même numéro d'appel mais ayant un numéro MSISDN différent. L'opérateur recevant un appel à destination de ce numéro d'abonné commun exécute une procédure pour appeler d'abord l'une des cartes SIM puis l'autre. En général, l'appel se fait d'abord vers la carte SIM du téléphone de voiture puis vers la carte SIM du mobile. L'ordre inverse est également possible.

Dans le cas d'un téléphone mixte GSM et WiFI faisant partie d'une paire de cartes SIM, l'invention s'applique dans les mêmes conditions que celles décrites ci-dessus.

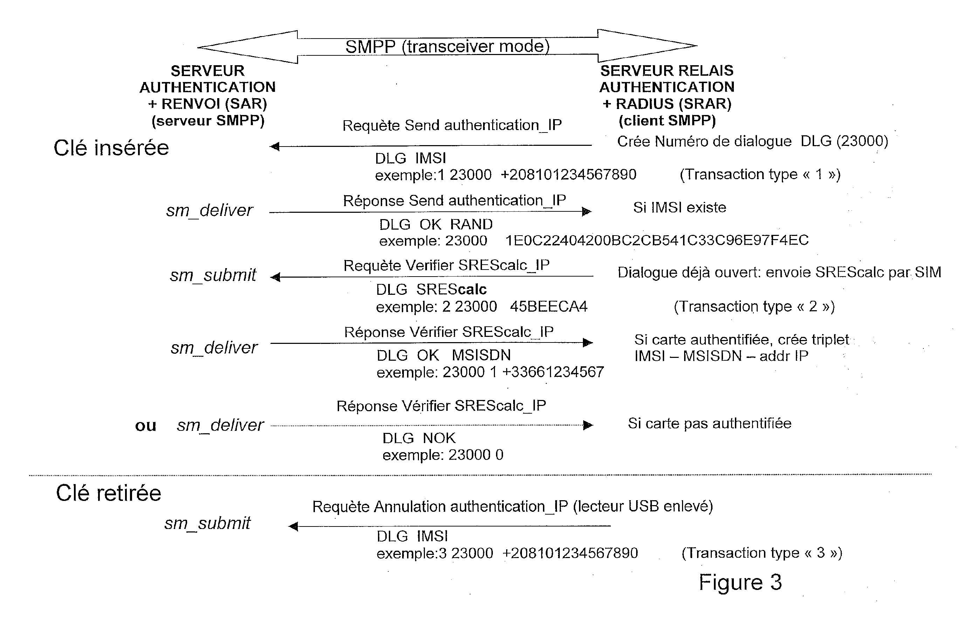

La description détaillée de la procédure pour l'identification de la carte SIM installée dans le poste mobile PM ainsi que de la procédure pour obtenir le numéro MSISDN et de la procédure pour le renvoi d'appel est donnée à la figure 3 ; elle ne nécessite pas de d'informations plus détaillées, les procédures présentées étant suffisamment explicites en elles-mêmes et illustrant les procédures données aux figures 1 et 2.

### Appel VolP vers un numéro du carnet d'adresse dans la carte SIM

Le carnet d'adresse dans la carte SIM est transmis au SRAR qui le compare à la liste de tous les utilisateurs connectés et retourne vers le CRA du poste mobile l'intersection des 2 ensembles, ce qui permet d'appeler ces numéros entièrement en VolP en restant dans le système, pour bénéficier notamment d'une sécurisation ou d'une gratuité.

### R E F E R E N C E S

[1] Digital Cellular Telecommunication System(Phase 2+) Mobile Application Part (MAP) Specification (3GPP TS 29.002 version 5.9.0 Release 5), www.etsi.org

### GLOSSAIRE et ABREVIATIONS UTILISEES

AUC : fonction intégrée ou séparée d'un registre HLR qui gère l'identification.
CRA : (Client de Relais d'Identification). Programme du poste mobile PM qui s'active quand on branche la carte SIM dans le lecteur.
GMSC : « Gateway MSC», commutateur téléphonique permettant aussi d'obtenir des informations de mobilité par l'intermédiaire d'une connexion au réseau SS7 et d'accords d'itinérance.
HLR : « Home Location Register » Registre de Localisation Principal d'un abonné de mobile.
IMSI : « International Mobile Subscriber Identity » . Numérotation interne aux réseaux de mobiles avec des codes pays différents (208 pour France au lieu de 33).
MAP : « Mobility Application Part ». Protocole standard de haut niveau du GSM qui effectue tous les échanges liés à la mobilité (itinérance). Il décrit notamment les services "REGISTER SUPPLEMENTARY SERVICE » SEND AUTHENTICATION, RESTORE DATA.
MSC-VLR: «Mobile Switching Centre-Visited Location Register » équipement de commutation d'un réseau de mobiles avec sa base de données des visiteurs.
MSISDN : « Mobile Subscriber International Number » : Numéro « classique » du mobile connu du monde extérieur à son réseau.
Roaming: (Itinérance), Dispositions contractuelles et techniques permettant à un mobile, de fonctionner dans d'autres réseaux que le sien.
SAR : Serveur d'Identification et de renvoi pour l'identification de la carte SIM en ne communicant qu'un numéro aléatoire aux autres éléments.
SMPP : "Short Message Point to Point". Le protocole standardisé par www.smppforum.org.
SRAR : Serveur de Relais d'Identification et protocole RADIUS.
SIM : (carte puce) comportant le numéro IMSI caractéristique d'un abonné et pouvant être mise dans n'importe quel téléphone GSM.
SS7 : (Réseau SS7 international). Réseau de paquets utilisés entre les réseaux de mobiles pour la transmission de la signalisation.
VMS : (Voice Mail System), Système de Messagerie Vocale.
Mode VoIP : ("Voice Over IP"), transmission de communications téléphoniques sur IP.
WiFI : Système de transmission de données au protocole IP par radio entre des "bornes" et des mobiles ou des PC portables disposant d'une interface WiFI.

## Revendications

1. Système de terminaison d'appel par le réseau Internet IP vers un numéro de mobile A pour recevoir automatiquement dans un poste mobile PM ne fonctionnant pas en mode GSM, les appels destinés à ce numéro de mobile A, mis en oeuvre sans coopération de l'opérateur du mobile A,
**caractérisé en ce qu'**il comprend
- un serveur SAR d'identification et de renvoi, installé dans un réseau GSM et communiquant par le protocole standard MAP avec le registre HLR de ce réseau et aussi par une liaison IP,
- un serveur SRAR relais d'authentification appliquant le protocole RADIUS, relié au serveur SAR et permettant à la passerelle de mode VoIP, à partir du numéro MSISDN du mobile, de trouver l'adresse IP, dynamique, attribuée au poste mobile PM et de diriger l'appel en mode VoIp, ce serveur n'ayant que des interfaces IP,
- un lecteur de carte SIM associé au poste mobile PM,
- un programme CRA dans le poste mobile PM pour communiquer avec la carte SIM placée dans le lecteur, et avec le serveur SRAR,
- une plate-forme VolP entre le réseau téléphonique et la téléphonie par IP, mettant en oeuvre le protocole VolP en ayant obtenu l'adresse IP à partir du numéro MSISDN du mobile A,
- un programme VoIP dans le poste mobile PM, permettant d'émettre et de recevoir des appels par l'adresse IP.

2. Système de terminaison d'appel selon la revendication 1,
**caractérisé en ce que**
le réseau de la carte SIM du mobile A qui peut être appelé par un poste mobile a une fonction d'authentification AUC associée à son registre HLR pour alimenter le serveur SAR et lui fournir sur requête du poste mobile PM un numéro aléatoire RAND et un code SRES formé à partir du numéro aléatoire RAND et de la clé Ki associée au numéro IMSI du mobile A, le serveur SAR transmettant ces deux données (le numéro aléatoire RAND et le code SRES) au serveur SRAR, qui transmet le numéro aléatoire RAND au poste mobile PM pour que celui-ci calcule (A3) un code SRES_{calc} à partir du code SIM, et de la clé Ki contenue dans la carte SIM selon un procédé analogue (A3) au calcul effectué par la fonction d'authentification, la carte SIM renvoyant par l'intermédiaire du poste mobile PM, le code calculé SRES_{calc} au serveur SRAS pour qu'il compare le code SRES et le code SRES_{calc} et qu'en cas d'identité, il accepte le poste mobile PM comme étant autorisé par la carte SIM et transmet l'appel transmis entrant vers le poste mobile alors qu'en cas de différence, il refuse l'accès au poste mobile PM, en cas d'acceptation.

3. Système de terminaison d'appel selon les revendications 1 et 2,
**caractérisé en ce qu'**
après l'identification entre la carte SIM et la fonction AUC, le numéro de mobile MSISDN est obtenu par la procédure RESTORE DATA ce qui permet de faire un renvoi automatique des appels pour ce numéro vers une plate-forme VolP qui termine les appels sur le poste mobile PM, par la procédure REGISTER SUPPLEMENTARY SERVICE qui ne nécessite pas la procédure UPDATE LOCATION.

4. Système de terminaison d'appel selon la revendication 1,
**caractérisé en ce que**
le lecteur de carte SIM est branché sur la prise USB d'un PC utilisé comme poste mobile PM.

5. Système d'émission d'appels en VoIP selon la revendication 1,
**caractérisé en ce que**
le lecteur de carte permet de lire le carnet d'adresse de la carte SIM et par intersection avec la liste de tous les utilisateurs connectés d'afficher la liste personnelle de connectés sur le PC pour permettre l'appel en VoIP de bout en bout.
